# EUROPÄISCHE PATENTSCHRIFT

(11) **EP 1 445 175 B1**
(45) Veröffentlichungstag und Bekanntmachung des Hinweises auf die Patenterteilung: **12.10.2005**
(21) Anmeldenummer: 04000213.1
(22) Anmeldetag: 08.01.2004
(51) Int. Cl.: B62D 21/11, B60K 5/00

(54) **Torsionelastisch Rahmen, insbesondere für den Einsatz in Fahrzeugen von Antriebseinheiten**
Resilient frame, in particular for the mounting of motor units on vehicles
Chassis élastiquement déformable, en particulier pour le montage de groupes moteur sur des véhicules

(30) Priorität: 17.01.2003 DE 10301914
(43) Veröffentlichungstag der Anmeldung: 11.08.2004
(73) Patentinhaber: Voith Turbo GmbH & Co. KG, 89522 Heidenheim (DE)
(72) Erfinder: Exner, Jochen, 89564 Nattheim (DE)
(74) Vertreter: Koch-Huld, Annegret Christa

(56) Entgegenhaltungen:
- DE-A- 10 061 127
- US-A- 3 557 894
- US-A- 3 918 850
- US-A- 4 453 740

## Beschreibung

Die Erfindung betrifft einen Rahmen, im Einzelnen mit den Merkmalen aus dem Oberbegriff des Anspruches 1.

Antriebseinheiten für den Einsatz in Fahrzeugen, insbesondere Schienenfahrzeugen, sind in einer Vielzahl von Ausführungen bekannt. Diese umfassen mindestens eine Antriebsmaschine und eventuell eine mit dieser gekoppelte Getriebebaueinheit sowie weitere Nebenaggregate, welche dabei in speziell dafür ausgelegten Rahmeneinheiten angelenkt sind. Die Typenvielfalt und Auslegung der Antriebskomponenten, deren Anordnung sowie die räumlichen Gegebenheiten des einzelnen Fahrzeuges, insbesondere beim Einsatz in Schienenfahrzeugen des einzelnen Triebwagentyps bedingen dabei eine hohe Variantenvielfalt, die auch hinsichtlich der Belastbarkeit ausgelegt sind. Aus der Druckschrift DE 100 61 127 A1 ist eine Rahmenbaureihe vorbekannt, bei der der einzelne Rahmen aus einem Haupt- und einem Nebenquerträger besteht, die über einen Längsträger miteinander verbunden sind. Der Rahmen ist biegeweich und torsionselastisch ausgeführt. Dies bietet die Möglichkeit einer optimalen Aufnahme und Einleitung von Kräften. Allerdings bestehen bezüglich der biegeweichen und torsionselastischen Ausführung des gesamten Rahmens eine Vielzahl von Möglichkeiten, die nur bei entsprechender Auslegung des Gesamtrahmens zum gewünschten Erfolg führen. Des Weiteren ist bei der Ausgestaltung des Rahmens darauf zu achten, dass eine Belastung infolge der Verdrillung oder Verbiegung des Wagenkastens nicht zu undefinierten Belastungen in der Rahmenstruktur führt. Problematisch gestaltet sich bei nicht korrekter Auslegung für den Einzelfall auch das Schwingungs- und Akustikverhalten der Gesamtrahmenstruktur, da die gelagerten Massen nur bedingt voneinander entkoppelbar sind. Bei der in dieser Druckschrift dargestellten Rahmenausführung ist der Längsträger in Form von zusammengefügten Rechteckprofilelementen ausgeführt, die durch das Aneinanderfügen eine entsprechend geformte Längsträgerstruktur ermöglichen, die unterschiedliche Funktionsebenen erzeugen. Die Anbindung der Längsträger erfolgt steif an den Querträgern. Verformungen des Rahmens, insbesondere der Längsträger werden durch die steifen Anschlüsse verhindert, wodurch das Gesamtsystem hohen Spannungen ausgesetzt ist, denen bei Auslegung des Rahmens wiederum Rechnung zu tragen ist. Diese Belastungen sind jedoch nicht immer definierbar.

Der Erfindung liegt daher die Aufgabe zugrunde, einen Rahmen der eingangs genannten Art derart weiterzuentwickeln, dass die genannten Nachteile vermieden werden. Insbesondere wird auf eine optimale Einleitung der durch die Motor-Getriebe-Baueinheit bedingten Längsbelastung in den Hauptquerträger abgestellt, wobei auch eine Belastung infolge der Verdrillung oder Verbiegung des Wagenkastens nicht zu undefinierten Belastungen in der Rahmenstruktur führen soll. Die Antriebseinheit ist besser von der Umgebung zu entkoppeln, um das Geräuschverhalten während des Betriebes möglichst gering zu halten.

Die erfindungsgemäße Lösung ist durch die Merkmale des Anspruches 1 charakterisiert. Vorteilhafte Ausgestaltungen sind in den Unteransprüchen beschrieben.

Der Rahmen umfasst einen Hauptrahmen, wobei der Hauptrahmen im Wesentlichen der Anlenkung an ein Fahrgestell oder Wagenkasten dient. Der Hauptrahmen umfasst dabei mindestens einen Hauptquerträger zur Aufnahme und Übertragung der Hauptlast in alle Richtungen, einen Nebenquerträger zur Aufnahme der Stützkräfte der Antriebseinheit, insbesondere einer Motor-Getriebe-Einheit sowie dem Hauptanteil der Massenkräfte aus Hilfs- beziehungsweise Zusatzaggregaten und einen zwischen Haupt- und Nebenquerträger in Längsrichtung verlaufenden Längsträger. Dieser dient dabei der Verbindung zwischen den Hauptquer- und Nebenquerträger und realisiert eine Anordnungs- und Montageebene für die Hauptmasse, insbesondere eine Motor-Getriebeeinheit und eventuell eine Anordnungs- und Montageebene für Hilfsaggregate, die jeweils in vertikaler Richtung versetzt zum Hauptquerträger und/oder Nebenquerträger angeordnet sind. Erfindungsgemäß ist der Längsträger in Längsrichtung durchgehend ausgebildet, das heißt einteilig und damit frei von Unterbrechungen bzw. Fügestellen ausgeführt und weich gestaltet, so dass eine Durchbiegung des Längsträgers ohne Übertragung dieser auf den Wagenkasten, das heißt entkoppelt von diesem erfolgen kann. Die Verbindung des Längsträgers mit dem Nebenquerträger erfolgt dabei mit geringer Steifigkeit bzw. einem angepassten Steifigkeitssprung bezogen auf die Biegesteifigkeit des Längsträgers. Es wird auf einen steifen Anschluß des Längsträgers an den Nebenquerträger verzichtet. Diese Lösung ermöglicht eine Flexibilität des Rahmens in Längs- und Vertikalrichtung und die Torsionsweichheit des gesamten Rahmens, die die dynamischen Bewegungen und Verformungen des Fahrzeuggestells im Betrieb flexibel mitmacht.

Hauptquerträger und Nebenquerträger können entsprechend der Gegebenheiten in einer in vertikaler Richtung angeordneten Ebene oder aber in vertikaler Richtung zueinander versetzt angeordneten Ebene angeordnet sein. Mindestens ist jedoch ein Versatz zwischen dem Längsträger und dem Nebenquerträger vorgesehen. Dieser wird über Stützträger und deren Kopplung mit dem Längsträger und/oder dem Nebenquerträger ausgeglichen. Zur Realisierung der weichen Ausgestaltung des Längsträgers ist dieser wenigstens mittelbar elastisch über die Stützträger an den Nebenträger angebunden. Dies kann durch die spezielle Ausgestaltung der Verbindung zwischen Längsträger und Stützträger erfolgen, wobei die Kopplung zwischen Stützträger und Nebenquerträger biegesteif ausgeführt ist. Diese Ausgestaltung kann durch die beiden Verbindungselemente erfolgen oder aber durch spezielle Zwischenelemente. Eine andere Möglichkeit besteht darin, die Kopplung zwischen Stützträger und Längsträger biegesteif zu gestalten, wobei die Anbindung der Stützträger an den Nebenquerträger dann elastisch erfolgt.

Der Längsträger bzw. die einzelnen Längsträgerelemente sind dabei definiert gebogen ausgeführt, so dass eine Anbindung an den Hauptquerträger vorzugsweise direkt in einer Ebene, die durch den Hauptquerträger bestimmt wird, erfolgen kann. Die Anbindung an den Nebenquerträger erfolgt indirekt über Stützträger. Der Längsträger ist somit durch eine Biegung charakterisiert, die eine Anbindung direkt am Hauptquerträger ermöglicht, wobei der Verlauf in Längsrichtung zum Nebenquerträger hin durch einen Verlauf in vertikaler Richtung betrachtet nach unten charakterisiert ist. Entsprechend der Dimensionierung der Biegung des Längsträgers kann die Elastizität dessen eingestellt werden, in dessen Folge die Hauptlasten auf den Hauptquerträger und die geringen Lasten auf den Nebenquerträger übertragen werden. Ferner sind durch die gebogene Gestaltung des Längsträgers die sekundären Aufhängepunkte des Rahmens, die durch die Lagerungen von Haupt- und Nebenquerträger charakterisiert sind, nicht mehr direkt verbunden, also quasi ausgestützt. Statt dessen kann infolge der Biegung des Längsträgers eine Biegeverformung auf der gesamten Länge in Längsrichtung stattfinden, die demnach betraglich mindestens auf die Stützweite zwischen Haupt- und Nebenquerträger wirkt. Als praktische Folge erfolgt eine Entkoppelung der Belastung und der Kräfte zwischen Haupt- und Nebenquerträger z. B. zum Wagenkasten hin, da der für die Übertragung der Kraft notwendige Lagerweg durch die flexiblen Längsträger teilweise übernommen bzw. kompensiert wird. Einen wichtigen Einfluss hat diese Konzeption auch auf das Schwingungs- und Akustikverhalten, da die gelagerten Massen beiderseits des Längsträgers voneinander entkoppelt werden und sich somit Eigenfrequenzen nicht über den gesamten Rahmen auswirken.

Ferner umfasst der Rahmen gegebenenfalls auch einen separaten Hilfsrahmen zur Aufnahme der Antriebseinheit und Abstützung dieser am Hauptrahmen. Dieser ist am Hauptrahmen angelenkt und dient der Abstützung der Hauptmasse, insbesondere einer Motor-Getriebeeinheit am Rahmen. Der Hilfsrahmen ist in diesem Fall lösbar mit dem Hauptrahmen verbindbar. Eine andere Möglichkeit besteht darin, die Hauptmasse nicht speziell über einen Hilfsrahmen, sondern direkt in der dafür vorgesehenen Anordnungs- und Montageebene am Hauptrahmen anzulenken bzw. zu lagern.

Die erfindungsgemäße Lösung ist insbesondere zur Stützung und Lagerung von Antriebskomponenten geeignet. Der Einsatz kann in jeglicher Art von Fahrzeugen erfolgen, vorzugsweise in Schienenfahrzeugen.

Die erfindungsgemäße Lösung wird anhand von Figuren erläutert. Darin ist im Einzelnen Folgendes dargestellt:
- Figur 1: verdeutlicht in schematisch vereinfachter Darstellung den Grundaufbau eines erfindungsgemäß gestalteten Rahmens;
- Figur 2: verdeutlicht anhand eines Ausschnittes aus einem Rahmen gemäß Figur 1 eine Möglichkeit der Verbindung zwischen dem Längsträger und dem Stützträger.

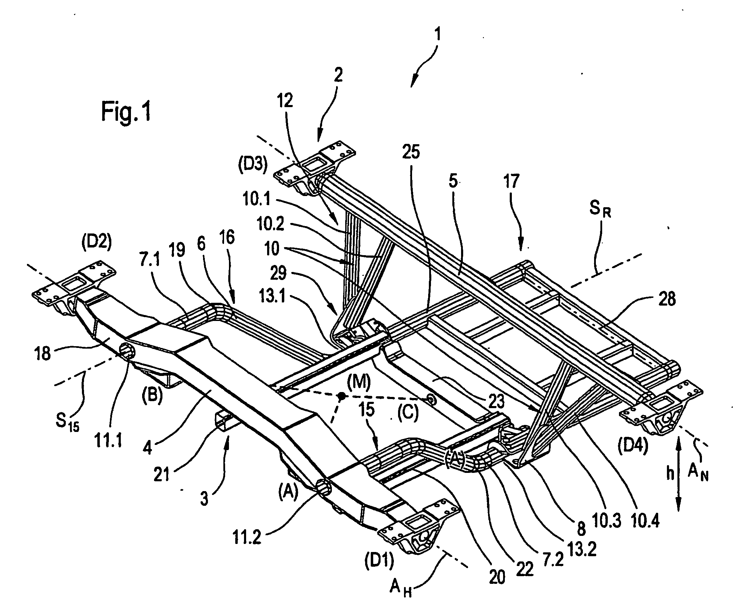

Die Figur 1 verdeutlicht in schematisch vereinfachter Darstellung den Grundaufbau eines erfindungsgemäß gestalteten Rahmens 1 in biegeweicher und torsionselastischer Ausführung, welcher in besonders vorteilhafter Weise für den Einsatz in Schienenfahrzeugen, unabhängig von der Art des Antriebssystems, beispielsweise Triebwagen mit dieselhydraulischen Antriebssystemen geeignet ist. Der Rahmen 1 umfasst dabei einen Hauptrahmen 2, welcher aus Längsträgern und Querträgem aufgebaut ist, und einen, dem Hauptrahmen 2 zuordenbaren Hilfsrahmen 3, an welchem die für unterschiedliche Fahrzeuge, insbesondere Triebwagen, vorgesehenen Antriebsaggregate, beispielsweise in Form von Dieselmotoren gelagert werden. Der Hilfsrahmen 3 kann dabei lösbar mit dem Hauptrahmen 2 verbunden sein oder als eigenständiges Rahmenelement im Hauptrahmen 2 angeordnet werden. Der Hauptrahmen 2 umfasst dabei mindestens zwei Querträger, einen Hauptquerträger 4 und einen Nebenquerträger 5 sowie einen Längsträger 6, umfassend zwei Längsträgerelemente 7.1 und 7.2. Der Hauptquerträger 4 dient dabei der Aufnahme und Übertragung der Hauptlasten in alle Richtungen, während der Nebenquerträger 5 zur Aufnahme der Stützkräfte der im Hilfsrahmen 3 gelagerten Antriebsmaschine-Getriebe-Einheit sowie dem Hauptteil der Massenkräfte aus Hilfs- beziehungsweise Zusatzaggregaten dient. Der Längsträger 6 verläuft dabei in Einbaulage im Fahrzeug betrachtet im Wesentlichen in Fahrtrichtung und verbindet den Hauptquerträger 4 mit dem Nebenquerträger 5. Die Ausrichtung des Längsträgers 6 erfolgt dabei bei Projizierung in einer Ebene betrachtet im Wesentlichen senkrecht zur Ausrichtung der theoretischen Verbindungslinien A_{H} und AN der Lagerungen von Hauptquerträger 4 und Nebenquerträger 5. Erfindungsgemäß ist der Längsträger 6, insbesondere sind die einzelnen Längsträgerelemente 7.1, 7.2 in Erstreckungsrichtung durchgehend, das heißt frei von einer Unterbrechung. Frei von Unterbrechungen bedeutet dabei, dass der Träger einteilig aus einem Element besteht und die Form des Trägers nicht durch Fügen mehrerer Einzelteile in einem Winkel oder der gleichen Ebene erzeugt wird. Somit sind bereits für den einzelnen Längsträger keine Spannungen aufgrund der druch das Fügen entsprechend der Ausführung aus dem Stand der Technik bedingten steifen Verbindung zu erwarten. Vorzugsweise wird der Längsträger 6 von einem Rohrelement gebildet. Ausführungen mit ovalem, rechteckigen oder beliebigem, insbesondere profiliertem Querschnitt sind ebenfalls denkbar. Der Längsträger 6, insbesondere die Längsträgerelemente 7.1 und 7.2 verbinden den Hauptquerträger 4 mit dem Traggestell 8 unterhalb des Nebenquerträgers 5 über Stützträger 10. Der Längsträger 6 ist derart gestaltet, dass er vom Hauptquerträger 4 oben verbunden zum Nebenquerträger 5 nach unten verläuft und dabei den Übergang auf eine Anordnungs- und Montageebene 28 für die Hilfsaggregate bildet. Ergänzt wird die Verbindung zwischen dem Längsträger 6 und dem Nebenquerträger 5 durch Stützträger 10, hier 10.1 bis 10.4. Diese sind vornehmlich in vertikaler Richtung in Einbaulage im Fahrzeug betrachtet ausgerichtet. Der Hauptquerträger 4 und der Nebenquerträger 5 sind dabei hinsichtlich der theoretischen Verbindungsachsen A_{H} und A_{N}, die durch die Ausrichtung der Träger beziehungsweise die Anordnung der Lagerachsen für diese charakterisiert ist, vorzugsweise parallel zueinander angeordnet, wobei der Hauptquerträger 4 und der Nebenquerträger 5 in einer Ebene oder aber in unterschiedlichen Ebenen in vertikaler Richtung angeordnet sein können. Neben der durchgehenden Gestaltung des Längsträgers 6 ist dieser auch weich, das heißt im Wesentlichen elastisch in Längs- und Vertikalrichtung ausgestaltet. Die Verbindung zwischen dem Längsträger 6 und dem Hauptquerträger 4 erfolgt dabei vorzugsweise direkt, das heißt frei von weiteren zwischengeordneten Übertragungselementen. Diese ist biegesteif ausgeführt. Die Verbindung ist hier jeweils mit 11.1 und 11.2 bezeichnet. Dabei ist jeweils ein Längsträgerelement 7.1 beziehungsweise 7.2 mit dem Hauptquerträger 4 verbunden. Die Verbindung erfolgt dabei jeweils symmetrisch bezogen auf eine, sich in Einbaulage in Fahrtrichtung beziehungsweise entsprechend der Fahrzeuglängsachse erstreckenden Symmetrieachse S_{R} für den Rahmen 1. Die Elastizität des Längsträgers 6 wird zum einen durch dessen Ausgestaltung und zum anderen durch die Anbindung an den Hauptquerträger 4 und den Nebenquerträger 5 realisiert. Die Anbindung an den Nebenquerträger 5 ist elastisch ausgeführt. Aufgrund der Ausgestaltung des Längsträgers 6 mit definierter Biegung und Anordnung gegenüber dem Nebenquerträger 5 mit einem bestimmten Abstand h in vertikaler Richtung erfolgt die Verbindung im Verbindungsbereich 12 mit dem Nebenquerträger 5 erfolgt über die Stützträger 10. Die elastische Anbindung des Längsträgers 6 an den Nebenquerträger 5 erfolgt dabei durch die Ausgestaltung eines weichen Überganges vom Längsträger 6 auf die Stützprofile beziehungsweise Konstruktionen des Nebenquerträgers 5. Dieser Übergang ist hier mit 13.1 beziehungsweise 13.2 bezeichnet, wobei 13.1 den Übergang zwischen dem Längsträgerelement 7.1 und dem Nebenquerträger 5, insbesondere die mit diesem verbundenen Stützträger 10.1 bezeichnet, während der Übergang 13.2 die Verbindung zwischen dem Längsträgerelement 7.2 und den entsprechenden Stützträgern 10.2 zur Kopplung mit dem Nebenquerträger 5 bezeichnet. Die Lagerung der Längsträgerelemente 7.1 und 7.2 im Hauptquerträger 4 erfolgt dabei beispielsweise wie in der Figur 1 dargestellt direkt im Hauptquerträger 4, das heißt im Hauptquerträgerprofil. In diesen Lagerpunkten erfolgt die Verbindung 11.1 beziehungsweise 11.2 zwischen dem Hauptquerträger 4 und dem Längsträger 6. Für den Hilfsrahmen 3 für die Antriebsmaschine-Getriebe-Einheit, insbesondere Motor-Getriebe-Einheit in vertikaler Richtung, der in der Regel unterhalb von Hauptquerträger 4 und Nebenquerträger 5 angeordnet ist, ist der Längsträger 6 hinsichtlich seiner geometrischen Gestaltung entsprechend ausgeführt, um die Anordnungs- und Montageebene 9 für die Motor-Getriebe-Einheit zu erreichen. Dazu ist der Längsträger 6, insbesondere die beiden Längsträgerelemente 7.1 und 7.2 in vertikaler Richtung nach unten gebogen bezogen auf die Lage des Hauptquerträgers 4 ausgebildet. Der Längsträger 6 ist dabei über seine Erstreckung in Längsrichtung durch im Wesentlichen drei Abschnitte unterteilbar, einen ersten Abschnitt 15, einen zweiten Abschnitt 16 und einen dritten Abschnitt 17. Im ersten Abschnitt 15 erfolgt dabei die Verbindung 11.1 beziehungsweise 11.2 mit dem Hauptquerträger 5. Dieser charakterisiert eine Verbindungsebene 18. Diese Verbindungsebene 18 ist dabei durch die Projizierung der theoretischen Verbindungsachse A_{H} zwischen den Lagerpunkten des Hauptquerträgers 4 in den Bereich der den Verlauf des ersten Abschnittes 15 charakterisierenden Achse, vorzugsweise Symmetrieachse S₁₅ für das Längsträgerelement 7.1 beziehungsweise 7.2 in eine gemeinsame Ebene charakterisiert. Die Symmetrieachse S₁₅ verläuft dabei vorzugsweise senkrecht zur theoretischen Verbindungsachse A_{H} des Hauptquerträgers 4. Der dritte Abschnitt 17 charakterisiert dabei die Lage der Anordnungs- und Montageebene 9 beziehungsweise übernimmt die Trägerfunktion für diese. Dazu ist der dritte Abschnitt 17 in vertikaler Richtung gegenüber dem ersten Abschnitt 15 und dabei der Verbindungsebene 18 versetzt angeordnet. Die Verbindung zwischen beiden erfolgt dabei über den zweiten Abschnitt 16. Die Übergänge zwischen erstem Abschnitt 15 und zweitem Abschnitt 16 beziehungsweise zweitem Abschnitt 16 und drittem Abschnitt 17 werden dabei über Krümmungsbereiche 19 und 20 realisiert. Diese sind durch eine vorgegebene definierte Krümmung charakterisiert. Diese werden durch eine definierte Biegung erzeugt. Vorzugsweise sind die Längsträgerelemente 7.1 und 7.2 im Querschnitt betrachtet mit Rundprofilen, vorzugsweise Rundhohlprofilen ausgebildet.

Ferner zu erkennen in der Figur 1 sind die einzelnen Lagerelemente zur Lagerung des Rahmens 1 gegenüber dem Fahrzeug, insbesondere am Wagenkasten. Die einzelnen Lager sind dabei für den Hauptquerträger mit D1 und D2 bezeichnet, für den Nebenquerträger mit D3 und D4. Über diese erfolgt die Aufhängung im Fahrzeug. Diese Lager D1 und D2 beziehungsweise D3 und D4 definieren dabei jeweils die theoretischen Verbindungsachsen A_{H} für den Hauptquerträger 4 und AN für den Nebenquerträger 5. Diese sind gemäß einer besonders vorteilhaften Ausgestaltung als Gummi-Metalllager ausgeführt. Die Hauptmasse M, zum Beispiel die Motor-Getriebeeinheit, wird im Rahmen 1 mittels in Steifigkeit und Dämpfung definierter Gummi-Metallelementen über den Hilfsrahmen 3 primär gelagert. Diese sind mit A, B und C bezeichnet. Diese sind dabei am Hauptquerträger 4 und an der Querstrebe 23 angeordnet. Die Anordnung am Hauptquerträger 4 erfolgt dabei im geringen Abstand zum Anschluss der Längsträgerelemente 7.1 und 7.2 an diesen. Die Lagerung C ist mittig zwischen den beiden Längsträgerelementen 7.1 und 7.2 an der Querstrebe 23, insbesondere der Ausgestaltung dieser als Wippe, ausgeführt. Damit wird ein zweistufiges Lagerkonzept geschaffen, welches eine optimale Entkopplung einzelner Kräfte und Belastungen ermöglicht. Zu beachten ist dabei, dass die einzelnen Gummi-Metallelemente auf die längs beziehungsweise vertikale Elastizität des Rahmens abgestimmt sind. Als besonders vorteilhaft werden insbesondere bei zweistufiger Lagerung dabei Steifigkeitsverhältnisse, das heißt, das Verhältnis zwischen der Steifigkeit des gesamten Rahmens 1 bezogen auf eine Lagerstelle zur Steifigkeit der einzelnen zugehörigen Gummi-Metall-Elemente in einem Bereich von mindestens einschließlich 3 bis 5 angesehen.

Mit der erfindungsgemäßen Lösung werden die sekundären Aufhängepunkte für den Hilfsrahmen 3 nicht direkt verbunden, das heißt quasi ausgestützt. Statt dessen kann in Folge der Biegung des Längsträgers 6 eine Biegeverformung auf der gesamten freien Länge stattfinden, die demnach betraglich mindestens auf der Stützweite W zwischen dem Haupt- und dem Nebenquerträger 4 beziehungsweise 5 wirkt. Als praktisches Ergebnis wird dabei eine Entkopplung der Belastung und der Kräfte zwischen dem Hauptquerträger 4 und dem Nebenquerträger 5 realisiert, zum Beispiel zum Sekundärlager am Wagenkasten hin, da der für die Übertragung der Kraft notwendige Lagerweg durch die flexiblen Längsträgerelemente 7.1 und 7.2 teilweise übernommen beziehungsweise kompensiert werden kann. Tritt dabei zum Beispiel eine Belastung in Längsrichtung auf, das heißt in Richtung der Erstreckung des Längsträgers 6, wird die Hauptlast durch den Hauptquerträger 4 übemommen, da dieser mit seiner erfindungsgemäßen Gestaltung die Längsbelastung vom Hilfsrahmen 3, insbesondere der dort gelagerten Motor-Getriebeeinheit übernimmt. Im umgekehrten Fall führt jedoch auch eine Belastung in Folge der Verdrillung oder Verbiegung des Wagenkastens nicht zu undefinierten Belastungen in der Struktur des Rahmens 1, da diese statisch unbestimmt in den Sekundärlagem D1 bis D4 gelagert wird. Der Wagenkasten und die Antriebseinheit, insbesondere die Motor-Getriebeeinheit, welche im Hilfsrahmen 3 gelagert wird, sind besser voneinander entkoppelt. Ferner bietet die erfindungsgemäße Gestaltung den Vorteil eines besseren Schwingungs- und Akustikverhaltens der Rahmenstruktur, da die gelagerten Massen beiderseits des Längsträgers 6 beziehungsweise zwischen den einzelnen Längsträgerelementen 7.1 und 7.2 voneinander entkoppelt werden und sich die Eigenfrequenzen wie auch die Eigenformen nicht über den gesamten Rahmen auswirken beziehungsweise sich zwischen Haupt- und Nebenquerträger 4 beziehungsweise 5 nicht mehr gegenseitig beeinflussen.

Der Hilfsrahmen 3 gemäß Figur 1 wird im Wesentlichen durch die die einzelnen Längsträgerelemente 7.1 und 7.2 verbindende Querstrebe 23 und die Längsstreben 21 und 22 beschrieben. Diese sind dabei vorzugsweise unlösbar, beispielsweise über Schweißverbindungen mit dem Längsträgerelementen 7.1, 7.2 gekoppelt, wobei deren Ausrichtung senkrecht zum Verlauf der beiden Längsträgerelemente 7.1 und 7.2, die parallel zueinander ausgerichtet sind, erfolgt. Die Querstrebe 23 dient dabei der Lagerung und Abstützung der Motor-Getriebeeinheit, die hier im Einzelnen nicht dargestellt ist, deren zu lagernde Hauptmasse jedoch mit M hinsichtlich der Lager verdeutlicht ist. Diese ist vorzugsweise nicht steif mit den Längsträgerelementen 7.1 und 7.2 gekoppelt, sondern ebenfalls elastisch. Die Querstrebe 23 übernimmt dabei die Funktion einer Wippe.

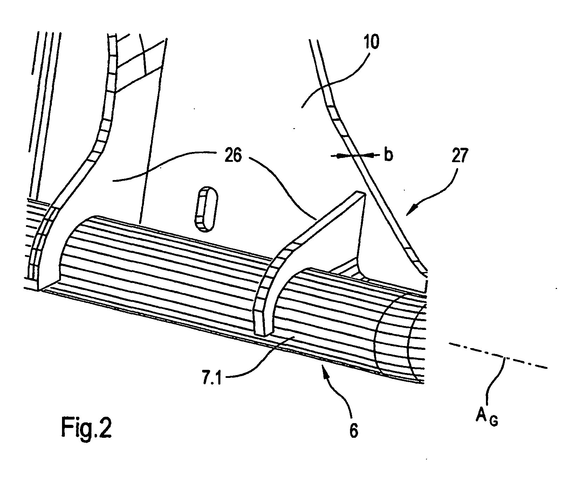

Zur Realisierung der Elastizität des Längsträgers 6 in Längs- und Vertikalrichtung ist dieser möglichst weich, das heißt elastisch an den Nebenquerträger 5 gekoppelt. Gemeint ist damit, dass insbesondere die Biegesteifigkeit im Übergang der Stützkonstruktion zum Nebenquerträger 5 so zu gestalten ist, dass eine Biegung des Längsträgers 6 möglichst wenig behindert wird, um eine Belastung der Längsprofile infolge Steifigkeitssprung herabzusetzen. Eine entsprechende konstruktive Möglichkeit ist in Figur 2 verdeutlicht. Bei dieser werden Anschlussbleche 26, die rechtwinklig zur Achse A₆ des Längsträgers beziehungsweise eines einzelnen Längsträgerelementes 7.1 angebunden sind und gleichzeitig die Anschlussstützen zum Nebenquerträger bilden, verwendet. Die Anschlussbleche 26 übernehmen damit auch die Funktion der Stützträger 10. Die Ausrichtung der Anschlussbleche 26 gemäß Figur 2 erfolgt rechtwinklig zur Längsrichtung, das heißt Symmetrieachse des Rahmens beziehungsweise senkrecht zur Verlaufsrichtung des einzelnen Längsträgerelementes 7.1 beziehungsweise 7.2.

Die Figur 2 verdeutlicht dabei einen Ausschnitt aus der Verbindung 27 zwischen dem Längsträgerelement 7.1 und dem Stützträger 10, wobei die Funktion des Stützträgers 10 vom Anschlussblech 26 übernommen werden kann. Hinter den Anschlussblechen kann dabei die Steifigkeit je nach Zielvorstellung hochgenommen werden. Damit wird erreicht, dass die Lasteinleitung aus der Antriebsmaschine-Getriebemasse M vornehmlich über die Stützträger 10 in den Nebenquerträger 5 erfolgt und nicht über eine Belastung der Längsträger 6 beziehungsweise der Längsträgerelemente 7.1, 7.2. Die Anschlussbleche 26 werden dabei mit geringer Wandstärke b ausgeführt. Diese beträgt beispielsweise ca. 10 mm. Dadurch ist der Steifigkeitssprung vergleichsweise zu einem in Längsrichtung aussteifenden Anschluss sehr gering. Der Längsträger 6 kann sich dabei aufgrund der Konstruktion der Anschlussbleche 26 ausreichend verbiegen.

Eine andere Möglichkeit ist in Figur 1 schematisch in vereinfachter Darstellung wiedergegeben. Bei dieser erfolgt die Kopplung zwischen den Stützträgern 10 und den Längsträgerelementen 7.1 und 7.2 durch eine biegeelastische Verbindung 29. Eine weitere, hier nicht dargestellte Ausführung besteht darin, ein zusätzliches Gummi-Metall-Element zur Verbindung mit den vertikalen Stützen vorzusehen.

Die Ankopplung der Stützträger 10 am Nebenquerträger 5 erfolgt dabei biegesteif. Es ist jedoch theoretisch auch denkbar, die Kopplung des Längsträgers 6 und dabei der Längsträgerelemente 7.1 und 7.2 mit den Stützträgern 10 biegesteif auszugestalten, wobei dann jedoch die Anbindung der Stützträger 10 an den Nebenquerträger 5 elastisch, zumindest in vertikaler Richtung erfolgen muss.

### Bezugszeichenliste

- 1: Rahmen
- 2: Hauptrahmen
- 3: Hilfsrahmen
- 4: Hauptquerträger
- 5: Nebenquerträger
- 6: Längsträger
- 7.1: Längsträgerelement
- 7.2: Längsträgerelement
- 8: Traggestell
- 9: Montageebene
- 10: Stützträger
- 11: Verbindung von Hauptquerträger und Längsträger
- 11.1, 11.2: Verbindung zwischen Hauptquerträger und Längsträger
- 12: Verbindungsbereich
- 13.1: Übergang
- 13.2: Übergang
- 14.1: Lagerung
- 14.2: Lagerung
- 15: erster Abschnitt
- 16: zweiter Abschnitt
- 17: dritter Abschnitt
- 18: Verbindungsebene
- 19: Verbindungsbereich
- 20: Krümmungsbereich
- 21: Querstrebe
- 22: Querstrebe
- 23: Querstrebe
- 24: stoffschlüssige Verbindung
- 25: stoffschlüssige Verbindung
- 26: Anschlussblech
- 27: Verbindung
- 28: Anordnungs- und Montageebene
- 29: elastische Verbindung
- A_{H}: theoretische Verbindungsachse zwischen den Lagern zur Aufhängung des Hauptquerträgers
- A_{N}: theoretische Verbindungsachse zwischen den Lagerpunkten zur Aufhängung des Nebenquerträgers
- S_{R}: Symmetrieachse des Rahmens
- W: Stützweite
- A₆: Längsträgerachse
- h: Abstand zwischen dem Längsträger und dem Nebenquerträger in vertikaler Richtung
- b: Wandstärke des Anschlussbleches
- s₁₅: Symmetrieachse des Längsträgers

## Patentansprüche

1. Rahmen (1)
1.1 mit einem Hauptrahmen (2), umfassend mindestens einen Hauptquerträger (4) und einen Nebenquerträger (5), die über einen Längsträger (6) miteinander verbunden sind;
1.2 der Rahmen ist biegeweich und torsionselastisch; **gekennzeichnet durch** die folgenden Merkmale:
1.3 der Längsträger (6) umfasst wenigstens zwei Längsträgerelemente (7.1, 7.2), die in Längsrichtung zwischen Haupt- und Nebenquerträger (4,5) durchgehend und frei von Unterbrechungen ausgebildet sind;
1.4 die Verbindung des Längsträgers (6) mit dem Nebenquerträger (5) erfolgt wenigstens mittelbar mit geringer Biegesteifigkeit bzw. einem an die Biegesteifigkeit des Längsträgers (6) angepassten Steifigkeitssprung;
1.5 der Längsträger (6) ist definiert gebogen.

2. Rahmen (1) nach Anspruch 1, **gekennzeichnet durch** das folgende Merkmal:
- der Längsträger (6) verbindet den Hauptquerträger (4) mit dem Nebenquerträger (5) unter Bildung einer Anordnungs- und Montageebene (9) für Nebenaggregate und/oder eine Antriebsmaschinen-Getriebeeinheit mit dem Nebenquerträger (5), welche in vertikaler Richtung gegenüber den Anschlussebenen an den Hauptquerträger (4) und den Nebenquerträger (5) versetzt angeordnet ist

3. Rahmen (1) nach Anspruch 2, **gekennzeichnet durch** die folgenden Merkmale:
3.1 mit einem, dem Hauptrahmen (2) zuordenbaren Hilfsrahmen (3);
3.2 der Hilfsrahmen (3) ist in der Anordnungs- und Montageebene (9) am Hauptrahmen (2) gelagert.

4. Rahmen (1) nach Anspruch 3, **dadurch gekennzeichnet, dass** der Hilfsrahmen (2) im Bereich der Verbindungsebene zwischen Längsträger (6) und Nebenquerträger (5) am Längsträger (6) angelenkt ist.

5. Rahmen (1) nach Anspruch 4, **dadurch gekennzeichnet, dass** der Hilfsrahmen (2) am Hauptquerträger (4) gelagert ist.

6. Rahmen (1) nach einem der Ansprüche 1 bis 5, **dadurch gekennzeichnet, dass** die Längsträgerelemente (7.1, 7.2) bezüglich der in Einbaulage im Fahrzeug theoretischen Fahrtrichtungsachse symmetrisch angeordnet und über Querstreben (21, 22, 23) miteinander verbunden sind.

7. Rahmen (1) nach einem der Ansprüche 1 bis 6, **dadurch gekennzeichnet, dass** der Längsträger (6) biegesteif mit dem Hauptquerträger (4) verbunden ist.

8. Rahmen (1) nach einem der Ansprüche 1 bis 7, **dadurch gekennzeichnet, dass** der Längsträger (6) in einer durch den Hauptquerträger (4) beschreibbaren Ebene mit dem Hauptquerträger (4) verbunden ist.

9. Rahmen (1) nach einem der Ansprüche 1 bis 8, **dadurch gekennzeichnet, dass** der Längsträger (6) über wenigstens einen Stützträger (10) mit dem Nebenquerträger (5) verbunden ist.

10. Rahmen (1) nach Anspruch 9, **dadurch gekennzeichnet, dass** der Stützträger (10) biegesteif mit dem Nebenquerträger (5) verbunden ist und elastisch mit dem Längsträger (6).

11. Rahmen (1) nach Anspruch 9, **dadurch gekennzeichnet, dass** der Längsträger (6) biegesteif mit dem Stützträger (10)verbunden ist und der Stützträger (10) elastisch am Nebenquerträger (5) angelenkt ist.

12. Rahmen (1) nach Anspruch 11, **dadurch gekennzeichnet, dass** die Anbindung der Stützträger (10) am Längsträger (6) über Anschlussbleche (26) mit geringer Wandstärke (b) erfolgt, wobei die Anschlussbleche rechtwinklig zur Achse des Längsträgers (6) angeordnet werden.

13. Rahmen (1) nach Anspruch 11, **dadurch gekennzeichnet, dass** die elastische Verbindung durch eine biegeelastische Verbindung realisiert wird.

14. Rahmen (1) nach Anspruch 11, **dadurch gekennzeichnet, dass** zwischen dem Längsträger (6) und dem Stützträger (10) ein Gummi-Metall-Element vorgesehen ist.

15. Rahmen (1) nach einem der Ansprüche 1 bis 14, **dadurch gekennzeichnet, dass** der einzelne Längsträger (6) als Rohr oder rohrförmiges Profilelement mit kreisrundem,ovalem, rechteckigem oder beliebigemQuerschnitt ausgeführt ist.

## Claims

1. A frame (1)
1.1 with a main frame (2), comprising at least one main transverse beam (4) and an auxiliary transverse beam (5) which are mutually coupled by way of a longitudinal beam (6);
1.2 the frame is flexurally soft and torsionally elastic;
**characterized by** the following features:
1.3 the longitudinal beam (6) comprises at least two longitudinal beam elements (7.1, 7.2) which are arranged continuously in the longitudinal direction between main and auxiliary transverse beams (4, 5) and are free from interruptions;
1.4 the connection of the longitudinal beam (6) with the auxiliary transverse beam (5) occurs at least indirectly with low flexural stiffness or with a stiffness leap adjusted to the flexural stiffness of the longitudinal beam (6);
1.5 the longitudinal beam (6) is bent in a defined manner.

2. A frame (1) according to claim 1, **characterized by** the following feature:
- the longitudinal beam (6) joins the main transverse beam (4) with the auxiliary transverse beam (5) by forming an arrangement and mounting plane (9) for auxiliary units and/or an engine/transmission unit with the auxiliary transverse beam (5) which is arranged offset in the vertical direction relative to the connecting planes on the main transverse beam (4) and the auxiliary transverse beam (5).

3. A frame (1) according to claim 2, **characterized by** the following features:
3.1 with an auxiliary frame (3) which can be associated with the main frame (2);
3.2 the auxiliary frame (3) is held in the arrangement and mounting plane (9) on the main frame (2).

4. A frame (1) according to claim 3, **characterized in that** the auxiliary frame (2) is linked to the longitudinal beam (6) in the region of the connecting plane between longitudinal beam (6) and auxiliary transverse beam (5).

5. A frame (1) according to claim 4, **characterized in that** the auxiliary frame (2) is held on the main transverse beam (4).

6. A frame (1) according to one of the claims 1 to 5, **characterized in that** the longitudinal beam elements (7.1, 7.2) are arranged symmetrically with respect to the axis of the driving direction theoretically in the vehicle in the installed position and are joined with each other via transverse struts (21, 22, 23).

7. A frame (1) according to one of the claims 1 to 6, **characterized in that** the longitudinal beam (6) is joined in a flexurally stiff way with the main transverse beam (4).

8. A frame (1) according to one of the claims 1 to 7, **characterized in that** the longitudinal beam (6) is connected with the main transverse beam (4) in a plane which can be described by the main transverse beam (4).

9. A frame (1) according to one of the claims 1 to 8, **characterized in that** the longitudinal beam (6) is connected with the auxiliary transverse beam (5) by way of at least one support beam (10).

10. A frame (1) according to claim 9, **characterized in that** the support beam (10) is joined in a flexurally stiff way with the auxiliary transverse beam (5) and in an elastic way with the longitudinal beam (6).

11. A frame (1) according to claim 9, **characterized in that** the longitudinal beam (6) is joined with the support beam (10) in a flexurally stiff way and the support beam (10) is linked in an elastic way to the auxiliary transverse beam (5).

12. A frame (1) according to claim 11, **characterized in that** the linkage of the support beams (10) to the longitudinal beam (6) is made through joining plates (26) of low wall thickness (b), with the joining plates being arranged at a right angle to the axis of the longitudinal beam (6).

13. A frame (1) according to claim 11, **characterized in that** the elastic connection is realized by a flexural-elastic joint.

14. A frame (1) according to claim 11, **characterized in that** a rubber/metal element is provided between the longitudinal beam (6) and the support beam (10).

15. A frame (1) according to one of the claims 1 to 14, **characterized in that** the individual longitudinal beam (6) is configured as a tube or tubular profile element with circular, oval, rectangular or random cross section.

## Revendications

1. Châssis (1)
1.1 avec un châssis principal (2) comprenant au moins une traverse principale (4) et une traverse secondaire (5) reliées ensemble par un brancard (6) ;
1.2 le châssis est souple et élastique de torsion ;
**caractérisé par** les particularités suivantes :
1.3 le brancard (6) comprend au moins deux éléments de brancard (7.1, 7.2) conformés pour être continus sans présenter d'interruptions dans le sens de la longueur entre les traverses principale et secondaire (4, 5) ;
1.4 la liaison du brancard (6) avec la traverse secondaire (5) est réalisée du moins indirectement avec une faible rigidité à la flexion ou avec un écart de rigidité adapté à la rigidité à la flexion du brancard (6) ;
1.5 le brancard (6) est cintré de manière définie.

2. Châssis (1) selon la revendication 1, **caractérisé par** la particularité suivante :
- le brancard (6) relie la traverse principale (4) à la traverse secondaire (5) formant ainsi un plan d'agencement et de montage (9) pour des accessoires et/ou une unité machine d'entraînement - engrenage à la traverse secondaire (5), qui est décalée suivant la direction verticale par rapport aux plans de raccordement à la traverse principale (4) et à la traverse secondaire (5).

3. Châssis (1) selon la revendication 2, **caractérisé par** les particularités suivantes :
3.1 avec un châssis auxiliaire (3) apte à être associé au châssis principal (2),
3.2 le châssis auxiliaire (3) est monté sur le châssis principal (2) dans le plan d'agencement et de montage (9).

4. Châssis (1) selon la revendication 3, **caractérisé en ce que** le châssis auxiliaire (2) est articulé sur le brancard (6) à la hauteur du plan de jonction entre le brancard (6) et la traverse secondaire (5).

5. Châssis (1) selon la revendication 4, **caractérisé en ce que** le châssis auxiliaire (2) est monté sur la traverse principale (4).

6. Châssis (1) selon l'une quelconque des revendications 1 à 5, **caractérisé en ce que** les éléments formant brancard (7.1, 7.2) sont symétriques par rapport à l'axe théorique du sens de roulage lorsqu'ils sont montés dans le véhicule et qu'ils sont reliés ensemble par des entretoises transversales (21, 22, 23).

7. Châssis (1) selon l'une quelconque des revendications 1 à 6, **caractérisé en ce que** le brancard (6) est relié rigide à la flexion à la traverse principale (4).

8. Châssis (1) selon l'une quelconque des revendications 1 à 7, **caractérisé en ce que** le brancard (6) est relié à la traverse principale (4) dans un plan dans lequel peut s'inscrire la traverse principale (4).

9. Châssis (1) selon l'une quelconque des revendications 1 à 8, **caractérisé en ce que** le brancard (6) est relié à la traverse secondaire (5) par l'intermédiaire d'au moins un tube support (10) .

10. Châssis (1) selon la revendication 9, **caractérisé en ce que** le tube support (10) est relié à la traverse secondaire (5) par l'intermédiaire d'une liaison rigide à la flexion et au brancard (6) par l'intermédiaire d'une liaison élastique.

11. Châssis (1) selon la revendication 9, **caractérisé en ce que** le brancard (6) est relié au tube support (10) par l'intermédiaire d'une liaison rigide à la flexion et que le tube support (10) est articulé sur la traverse secondaire (5) par l'intermédiaire d'une liaison élastique.

12. Châssis (1) selon la revendication 11, **caractérisé en ce que** les tubes support (10) sont attachés au brancard (6) par l'intermédiaire de tôles de raccord (26) de faible épaisseur (b), les tôles de raccord étant disposées perpendiculairement à l'axe du brancard (6).

13. Châssis (1) selon la revendication 11, **caractérisé en ce que** la liaison élastique réalisée est une liaison élastique en flexion.

14. Châssis (1) selon la revendication 11, **caractérisé en ce qu'**un élément caoutchouc - métal est prévu entre le brancard (6) et le tube support (10).

15. Châssis (1) selon l'une quelconque des revendications 1 à 14, **caractérisé en ce que** le brancard (6) en soi est conformé en forme de tube ou d'élément profilé tubulaire de section ronde, ovale, rectangulaire ou de toute autre section.
